Europäisches Patentamt

European Patent Office

Office européen des brevets

(19)

(11) Publication number: **0 206 782**
**A2**

(12) **EUROPEAN PATENT APPLICATION**

(21) Application number: **86304762.7**

(22) Date of filing: **20.06.86**

(51) Int. Cl.⁴: **C 02 F 1/20**

(30) Priority: **20.06.85 FI 852479**

(43) Date of publication of application: **30.12.86**
**Bulletin 86/52**

(84) Designated Contracting States: **DE FR GB SE**

(71) Applicant: **Oy Santasalo-Sohlberg AB, Teollisuutie 2, SF-04300 Hyryla (FI)**

(72) Inventor: **Kroneld, Rolf, Tehtaankatu 1, SF-20500 Turku (FI)**
Inventor: **Reunanen, Markku, Itainen Pitkakatu 82 A 3, SF-20810 Turku (FI)**

(74) Representative: **Lee, Philip Graham et al, MARKS & CLERK 57/60 Lincoln's Inn Fields, London WC2A 3LS (GB)**

(54) Procedure and apparatus for removing volatile substance from water during distillation or evaporation.

(57) The invention is concerned with a procedure for removing volatile substances from water when distilling or evaporating water. The water to be purified, when it is feed water for a distilling apparatus (10), is heated to a high enough temperature or distillate or water to be evaporated or that has been evaporated and which already is at a high enough temperature is conducted into a vessel (31, 31a) communicating at it's top end with ambient air. Pure air is conducted into the same vessel (31, 31a) so that water and air are flowing in said vessel (31, 31a) in opposite directions. The pure air is arranged to discharge in the lower part of said vessel (31, 31a) through a dispersing means (33, 33a) in the form of microbubbles into the water and to carry along with it the harmful substances present in the water, whereby said harmful substances depart from the water by evaporation. The invention is furthermore concerned with apparatus for performing the procedure.

1

M&C FOLIO: 799P52458                    WANGDOC: 0316L

## "PROCEDURE AND APPARATUS FOR REMOVING VOLATILE SUBSTANCE FROM WATER DURING DISTILLATION OR EVAPORATION"

This invention relates to a procedure and apparatus for removing volatile substances from water during distillation or evaporation.

In drinking water purification, the commonest method is water chlorination, in which halogenated hydrocarbons produced from chlorine are left in the water. Adoption of improved procedures is prevented by their high expense, and therefore chorination will probably still be used for several decades. In recent time, increasing attention has been paid to the occurrence of halogenated hydrocarbons in the environment and in man. In the environment, halogenated hydrocarbons are for instance encountered in chlorine-disinfected drinking water, and they have also been demonstrated in human serum and urine. Table 1 is a list illustrating the occurrence of certain volatile impurities in various kinds of water. Halogenated hydrocarbons are toxic to man; they have a lipophilic character and they are in addition carcinogenic.

These compounds are low-molecular and readily evaporate. Experience has taught that they cannot be completely removed from the water by active carbon filtering nor by inverted osmosis, particularly not chloroform ($CHCl_3$), which is the most toxic one. They are not removed in distilling processes either; they migrate with the vapour and end up in the distillate.

In Patent DE-859879 extra chlorine is removed by conducting air and ultrasonic vibration into the water which has to be purified, whereby chlorine escapes along with air bubbles. However, attempts at removing the above-mentioned halogenated hydrocarbons by this method have not been successful.

Table 1

List illustrating the occurrence of certain volatile
impurities in various kinds of water

| Compound | Lake Littoinen | | | | Drinking water | | | |
|---|---|---|---|---|---|---|---|---|
| | June 9th | Sept. 23rd | Nov. 5th | Dec. 2nd | June 9th | Sept. 23rd | Nov. 5th | Dec. 2nd |
| Toluene | 15 | 46 | 24 | 22 | 60 | 140 | 84 | 73 |
| $C_8$-alkane | 9 | 12 | 10 | 9 | 9 | 20 | 8 | 15 |
| $C_8$-alkane | 6 | 9 | 6 | 7 | 6 | 13 | 7 | 9 |
| Chlorobenzene | - | - | + | 1 | - | ? | 1 | 8 |
| Ethylbenzene | 4 | 6 | 9 | 7 | 10 | 30 | 17 | 15 |
| m-xylene | 19 | 22 | 26 | 20 | 42 | 98 | 55 | 47 |
| p-xylene | | | | | | | | |
| $C_9$-alkene | - | - | - | - | - | 4 | 4 | 4 |
| Styrene | 1 | 2 | 1 | 1 | 9 | 8 | 8 | 5 |
| o-xylene | 6 | 8 | 10 | 8 | 15 | 39 | 25 | 18 |
| n-nonane | 1 | 1 | + | 2 | 1 | 7 | 4 | 3 |
| $\alpha$-pinene | 2 | 1 | - | 1 | 2 | 1 | - | 3 |
| n-propylbenzene | 1 | 2 | 1 | 1 | 4 | 9 | 7 | 4 |
| Methylethylbenzene | 2 | 5 | 4 | 3 | 7 | 19 | 12 | 8 |
| Methylethylbenzene | 1 | 2 | 2 | 1 | 4 | 11 | 6 | 6 |
| Trimethylbenzene | 2 | 4 | 2 | 2 | 5 | 12 | 5 | 3 |
| Methylethylbenzene | 1 | 3 | 2 | 3 | 3 | 11 | 8 | 5 |
| Trimethylbenzene | 6 | 10 | 9 | 8 | 13 | 34 | 26 | 15 |
| Trimethylbenzene | 2 | 4 | 3 | 4 | 5 | 11 | 9 | 7 |
| n-decane | | | | | | | | |
| $C_4$-benzene | 2 | + | - | 1 | 3 | 8 | 2 | 2 |
| 1,8-chineol | 2 | 3 | 1 | 2 | 3 | 9 | 2 | 4 |
| Indane | - | - | 1 | - | - | - | 2 | - |
| $C_4$-benzene | - | 1 | + | - | 2 | 6 | 3 | 1 |
| $C_4$-benzene | - | 1 | + | - | 2 | 7 | 3 | 1 |
| Dimethylethylbenzene | - | 1 | 1 | 1 | 2 | 6 | 5 | 5 |

| Compound | Lake Littoinen | | | | Drinking water | | | |
|---|---|---|---|---|---|---|---|---|
| | June 9th | Sept. 23rd | Nov. 5th | Dec. 2nd | June 9th | Sept. 23rd | Nov. 5th | Dec. 2nd |
| Dimethylethylbenzene | 1 | 2 | 1 | 1 | 2 | 11 | 11 | 5 |
| $C_{12}$-alkane | | | | | | | | |
| Phencone | 2 | 2 | 2 | 1 | 3 | 9 | 4 | 3 |
| Dimethylethylbenzene | − | − | + | + | − | − | + | 2 |
| $C_4$-benzene | 5 | + | 3 | 3 | 16 | 4 | 4 | 5 |
| Tetramethylbenzene | 5 | 3 | 2 | 3 | 2 | 12 | 5 | 2 |
| n-undecane | | | | | | | | |
| Camphor | 2 | + | + | 1 | 2 | 5 | 2 | 1 |
| $C_5$-benzene | 2 | 1 | + | 1 | 2 | 4 | + | 1 |
| $C_4$-benzene | 2 | 1 | + | 1 | 2 | 4 | + | 1 |
| $C_5$-benzene | 2 | − | − | − | 2 | 5 | + | 1 |
| Naphthalene | 5 | 3 | 5 | 5 | 2 | 6 | 7 | 4 |
| n-dodecane | + | − | + | + | + | 2 | 1 | + |
| Methylnaphthalene | + | + | 1 | 1 | + | 2 | 1 | 1 |
| Methylnaphthalene | − | − | 1 | 1 | − | 1 | − | 1 |
| n-tridecane | 1 | 1 | 1 | 3 | + | 4 | 1 | 1 |
| n-tetradecane | 1 | 1 | 1 | 1 | + | 2 | 1 | + |
| Acenaphthene | 1 | 1 | 1 | 1 | 6 | 2 | 1 | 1 |
| n-pentadecane | 8 | 5 | 5 | 3 | 3 | 3 | 3 | 1 |
| n-hexadecane | 2 | 4 | 6 | 1 | 2 | 2 | 2 | 1 |
| n-heptadecane | 40 | 18 | 15 | 7 | 5 | 5 | 5 | 2 |
| Pristane | 1 | 5 | 1 | 1 | 1 | 1 | 1 | + |
| n-octadecane | 2 | 5 | 22 | 13 | 2 | 3 | 8 | 5 |
| Phytane | 2 | 4 | 39 | 7 | 1 | 1 | 19 | 2 |
| n-nonadecane | 2 | 5 | 12 | 3 | 1 | 2 | 4 | 5 |
| Dibutylphthalate 1) | + | + | + | + | + | + | + | + |

$\mu g/l$

| Month | II | III | IV | VI | VII | VIII | IX | XI |
|---|---|---|---|---|---|---|---|---|
| $CHCl_3$ | 0.3 | 0.03 | 0.03 | 0.2 | 0.5 | 0.6 | 1.3 | 0.4 |

$\mu g/l$

| Month | II | III | IV | VI | VII | VIII | IX | XI |
|---|---|---|---|---|---|---|---|---|
| $CCl_4$ | + | + | 0.01 | 0.05 | 0.06 | 0.03 | 0.03 | |
| $CHBrCl_2$ | + | + | + | 0.05 | 0.01 | 0.03 | 0.09 | − |
| $CHBr_2Cl$ | − | + | − | 0.3 | 1.2 | 0.1 | 0.5 | − |
| $Cl_2C=CCl_2$ | + | + | + | 0.1 | 0.1 | + | + | + |
| $ChBr_3$ | − | − | − | + | 1.2 | 0.5 | 0.4 | 0.4 |

River water 2)

+ = Some

− = Not observable

| | A | B | C | D |
|---|---|---|---|---|
| $CHCl_3$ | 1.3 | 1.1 | 44.2 | 58.0 |
| $CCl_4$ | 0.03 | 0.03 | 0.09 | 0.09 |
| $CHBrCl_2$ | 0.09 | 0.1 | 9.9 | 10.7 |
| $CBrCl_3$ | − | − | 0.14 | 0.2 |
| $CBr_2Cl$ | 0.5 | 0.6 | 1.4 | 1.5 |
| $Cl_2C=CCl_2$ | + | 0.05 | 0.06 | 0.09 |
| $CHBr_3$ | 0.4 | 0.4 | + | − |

A = River water

B = Clarified water

C = Disinfected water

D = Mains water 2)

1) Kronbert, L. 1981. Inst för organisk kemi meddelanden. Åbo Akademi.

2) Kroneld, R., Reunanen, M. & Wahlroos, G. 1981. Kemia-Kemi No. 3 p. 142.

The matter is, however, topical e.g. in the case of patients to whom prolonged fluid therapy has been prescribed and for whom accumulation of toxic substances may become fatal.

The inventors have now developed a procedure by which the toxic substances can be eliminated during distillation or evaporation of water; the object of the invention is to enable the distilling or evaporating of water to become an appropriate procedure for the pharmaceutic industry so that the concentration of the said halogenated hydrocarbons can be reduced, for instance, in injection solutions.

The procedure of the invention is characterized firstly in that the water to be purified, when it is water being supplied to a distilling apparatus, is heated to a high enough temperature for distillate or water to be evaporated or which has been evaporated and is already at a high enough temperature, is conducted into a vessel communicating at it's top end with ambient air, pure air being conducted into the same vessel so that the water and the pure air flow in the vessel in opposite directions, and secondly in that the pure air discharges in the lower part of the vessel through a dispersion means in the form of microbubbles into the water, whereby harmful substances will depart from the water by evaporation.

The apparatus of the invention is intended to be connected to a distilling apparatus or an evaporating apparatus and comprises a vessel into which have been conducted in opposite directions, the water to be purified and pure air, the vessel being open at the upper end and having at it's lower end an exit pipe for purified water and comprising a dispersion means for distributing the air in the form of microbubbles in the vessel.

A plurality of such apparatus may be connected to a distilling apparatus in series and are provided with specific treatment vessels and members. As taught by the invention, into this treatment vessel pure air is supplied in a direction opposite to the direction of flow of the liquid, so that the flow ratio of air and water conducted into the treatment vessel is preferably about 5:1, with the air of particular members which, among other things, participate in the task of distributing the flow of air, uniformly in the treatment vessel. The special structural design of the members enhances this effect, which has been worked out on the basis of the chemical-physical reactions and analytic (gas chromatography, mass spectrometyl) properties of the compounds in contact between the fluids in the treatment vessel. The air dispersing means in the treatment vessel may for instance be a nozzle system or a porous body. After treatment, the liquid continues it's course to the distilling apparatus where it is distilled. The means may equally well be disposed in association with the exit pipe immediately after the distilling step.

The water to be purified is conducted into the treatment vessel under pressure, preferably at a pressure of 3 to 10 bar, and advantageously at elevated temperature, preferably 130-170°C.

The invention is described more in detail with particular reference to an advantageous embodiment thereof which is illustrated in the accompanying drawing in which:

Fig. 1 is a schematic drawing of a dstilling apparatus in conjunction with an apparatus according to the invention.

Fig. 2 is a schematic drawing of apparatus according to the invention.

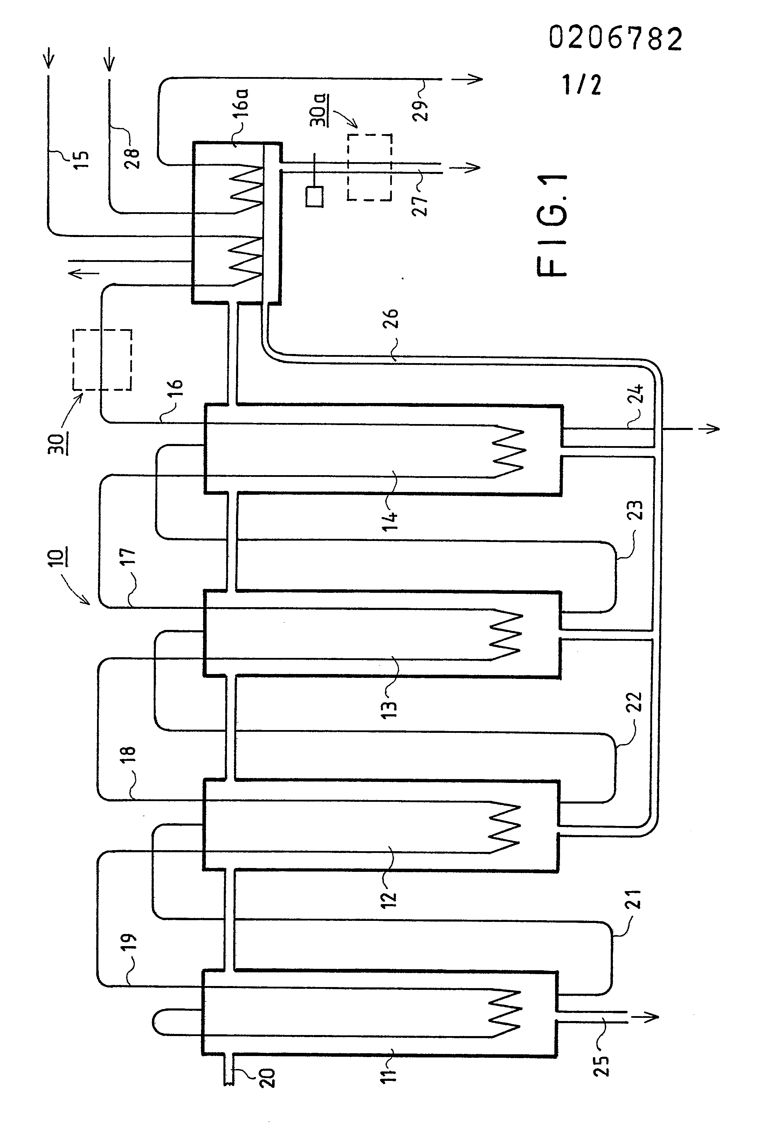

In Fig. 1, the feed water (15°C, 8-10 bar) flows through the pipe 15 into a heat exchanger 16a, where it is heated to about 95°C. The water is thereafter conducted into a purifying means 30 according to the invention, this point having been indicated in Fig. 1 as one of the two possibilities of connecting the purifying means 30 to the distilling apparatus 10. The other alternative is to connect it after the distilling process, to a pipe 27. According to the first alternative, the water is, after the purifying means 30, conducted further to the distilling process by a pipe 16. As depicted in Fig. 1, the water passes through distillation in four steps. After the first step 11, the water goes on through a pipe 19 to the second step 12, and it continues through a pipe 18 to the third step 13, through a pipe 17 to the fourth step 14. Plant steam is introduced through a pipe 20. The part of the water which has not been evaporated is conducted through pipes 21, 22, 23 to the next distilling step in each instance. The bottom flow is conducted through a pipe 24 out from the distilling apparatus 10. The impure condensate is removed by a pipe 25, and the distilled water is conducted through a pipe 26, through the heat exchanger 16a, and removed by the pipe 27. The temperature of the distillate is about 95-97°C. The cooling water (temperature e.g. 15°C of the heat exchanger flows through a pipe 28 and departs by a pipe 29, when it's temperature has been elevated e.g. to about 90°C.

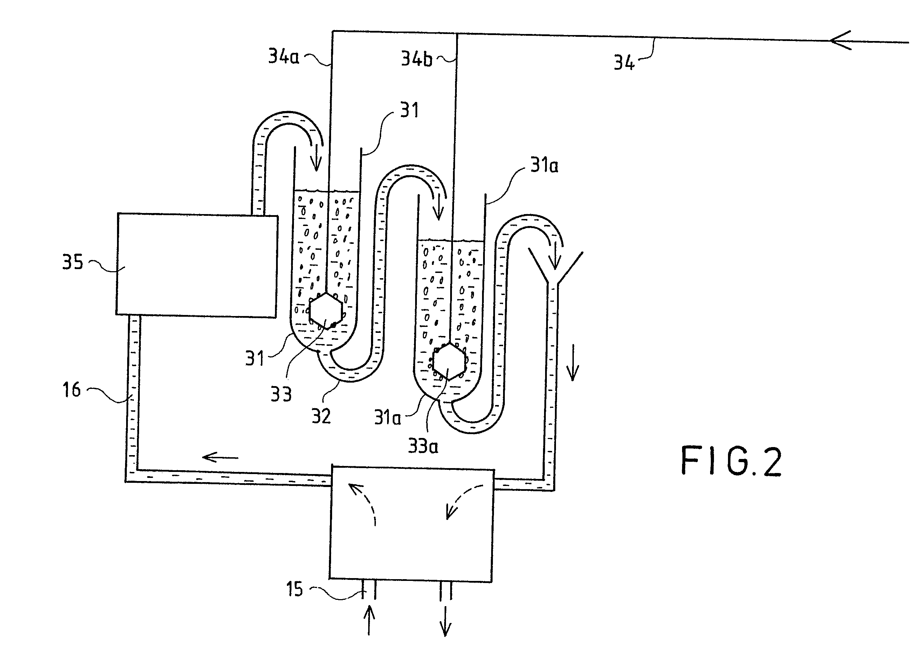

In Fig. 2, water to be purified which is e.g. at about 15°C, is conducted, e.g. under a pressure of about 8-10 bar, to be heated in a heater 35, which is equivalent to the heat exchanger 16a of Fig. 1, by the pipe 16 through the apparatus of the invention (30; 30a) to a first treatment vessel 31. The pressure in the vessel 31 is e.g. about 7.5-9.5 bar. Into the same vessel 31 is also conducted pure air, through the pipes 34 and 34a. In the vessel 31, the air is uniformly distributed in the form of microbubbles, with the aid of the member 33, the air flowing in the vessel 31 in a direction opposite to the direction in which the water flows. The volatile impurities are evaporated out with the aid of the micro-bubbles.

The water which has undergone the treatment is then conducted to a second treatment vessel 31a through the pipe 32 and is purified in a similar way. In the second step, there is shown the incoming air pipe 34b and the dispersion 33a. After the second step, the purified water is removed through the pipe 32.

Example

The experiment comprised treatment in two steps, however without heat exchange directed on the air. The temperature of the heated water was 80-90°C, the air flow rate was 50 1/h per vessel, the water flow rate was 10 1/h, the water volume in the treatment vessel 31, 31a was 150 litres per vessel, and the water level with reference to the members 33, 33a was 5 cm. A test run was performed with different concentrations, and it contained a few selected volatile impurities having properties characteristic of the volatile impurities. The results are seen in Table 2 below.

TABLE 2

--------------------------------------------------------------

Results of analysis in trial runs

--------------------------------------------------------------

| Substance | Water supplied, µg/l | WATER AFTER FIRST TREATMENT | | WATER AFTER SECOND TREATMENT | |
|---|---|---|---|---|---|
| | | µg/l | Reduction, % | µg/l | Reduction, % |

--------------------------------------------------------------

TRIAL RUN I

| | | | | | |
|---|---|---|---|---|---|
| $CHCl_3$ | 250 | 20 | 92 | – | 100 |
| $CHBrCl_2$ | 42 | 4.3 | 90 | 1.5 | 96 |
| $CHBr_2Cl$ | 28 | 3.6 | 87 | 1.2 | 96 |
| $CHBr_3$ | 16 | 2.7 | 83 | 1.0 | 94 |

TRIAL RUN II

| | | | | | |
|---|---|---|---|---|---|
| $CHCl_3$ | 125 | 9 | 93 | – | 100 |
| $CHBrCl_2$ | 21 | 2.8 | 87 | 0.5 | 98 |
| $CHBr_2Cl$ | 14 | 1.8 | 87 | 0.5 | 96 |
| $CHBr_3$ | 8 | 1.6 | 80 | 0.5 | 94 |

--------------------------------------------------------------

– = Not observable

a) Calculated on the water supplied.

11

## CLAIMS

1. Procedure for removing volatile substances from water during water distillation or evaporation, characterised firstly in that the water to be purified, when it is feed water for a distilling apparatus (10), is heated to a high enough temperature for distillate or water to be evaporated or which has been evaporated and is already at a high enough temperature, is conducted into a vessel (31, 31a) communicating at it's top end with ambient air, pure air being conducted into the same vessel (31, 31a) so that water and air flow into said vessel (31, 31a) in opposite directions and secondly in that the pure air is arranged to discharge into the lower part of said vessel (31, 31a) through a dispersing means (33, 33a) in the form of micro-bubbles into the water and to carry along with it the harmful substances present in the water, whereby said harmful substances depart from the water by evaporation.

2. Procedure according to claim 1, characterised in that the water to be purified is conducted into said vessel (31, 31a) under elevated pressure, preferably under pressure between 3 and 10 bar, and advantageously at an elevated temperature, preferably 130-170°C.

3. Procedure according to claim 1 or 2, characterised in that the flow ratio of the air and water conducted into said vessel (31, 31a) is 5:1.

4. Procedure according to claim 1, 2 or 3, characterised in that the procedure is performed in at least two steps.

5. Apparatus for performing the procedure according to any of claims 1 to 4 and connectable to a distilling apparatus (10) or to an evaporating apparatus and comprising a vessel (31, 31a) adapted to receive in opposite directions water to be purified and pure air,

said vessel (31, 31a) being open at the top and having at it's lower end an exit pipe (32, 32a) for purified water and comprising a dispersion means (33, 33a) for distributing the air in the form of microbubbles in the vessel (31, 31a).

6. Apparatus according to claim 5, characterised in that the dispersion means (33, 33a) is a nozzle system or a porous body.

7. Apparatus according to claim 5 or 6, characterised in that there is a plurality of vessels (31, 31a) in succession.

8. Apparatus according to any of clams 5 to 7, characterised in that it is connected to the distilling apparatus (10) either before the distilling process or after the distilling process.

FIG.1

FIG.2

34a    34b    34

31

31a

35

31

33

32    31a

33a

16

15

2/2

0206782